# EUROPEAN PATENT SPECIFICATION

(11) **EP 2 227 419 B1**
(45) Date of publication and mention of the grant of the patent: **28.11.2012**
(21) Application number: 08864745.8
(22) Date of filing: 22.12.2008
(51) Int. Cl.: B65D 1/02

(54) **COLLAPSIBLE BOTTLE**
FALTFLASCHE
BOUTEILLE COMPRESSIBLE

(30) Priority: 21.12.2007 GB 0724960
(43) Date of publication of application: 15.09.2010
(73) Proprietor: Brandspring Limited, Fareham Hampshire PO16 7BB (GB)
(72) Inventor: GREGG, Jason, Lewis, Fareham Hampshire PO16 7BB (GB); GOTT, Anthony, David, Fareham Hampshire PO16 7BB (GB); DOVER, Simon, William, Fareham Hampshire PO16 7BB (GB); BEETLESTONE, Frederick, Rogers, Minton, Fareham Hampshire PO16 7BB (GB)
(74) Representative: Schlich, George William
(86) International application number: PCT/GB2008/004264
(87) International publication number: WO 2009/081167

(56) References cited:
- EP-A- 0 644 121
- EP-A- 1 550 612
- WO-A-00/44630
- WO-A-97/07028
- WO-A-2007/083266
- DE-A1- 19 510 846
- US-A- 3 301 293
- US-A- 3 939 887
- US-A1- 2001 006 164

## Description

The present invention relates to a collapsible bottle.

Efficient disposal of water bottles, used in ever increasing numbers, has become a major environmental concern. Many currently used water bottles are not biodegradable and contribute significantly to the amount of waste disposed of in land fill sites, a limited resource which is rapidly being depleted. Full bottles contain water or other liquids but when disposed of are empty. Hence, their disposal can be particularly inefficient in that they may be transported to waste disposal sites in an empty state. Thus, both in transport and in eventual storage, the empty bottle takes up a large volume, mainly composed of air, and this is highly inefficient.

A number of known bottles are designed to be collapsible. These have the advantage of taking up less space after use, whilst being transported or in eventual storage.

Examples of bottles which can be compressed are set out in US 2001/0006164, US 2003/0121881 and JP 3289447. These bottles are designed to be compressible and are designed to remain compressed and not spring back into their original conformation.

US 5632397 discloses a bottle having a partly cylindrical, partly pleated body, the pleated section having four fold starters offset by a small angle from one pleat to the next. It is collapsible but designed nevertheless to resist axial forces, e.g. when in a stack. As a result a lot of force is needed to collapse it and collapse does not propagate easily from one pleat to the next.

Further known bottles are described in US 5584413 and WO 88/05014, these bottles comprising mechanisms which lock the bottles in a compressed state.

A yet further bottle is known from EP 0644121, which comprises a plurality of collapsible pleats and regions of weaknesses on the pleats to promote axial collapse of the bottle, according to the preamble of claim 1.

A problem with known bottles is that the mechanism to lock them in compressed positions requires extra tooling and material which is expensive. Some bottles are not biodegradable, which is nowadays undesirable. A further problem, common to the known bottles, is that collapse of the bottles is random and can occur or commence at unpredictable locations on the bottle. As a result, the crushing or collapsing may be incomplete or may require a particularly large amount of force or may require force directed very carefully and squarely along the axis of the bottle. These issues compromise the ease and completeness of collapsing of the bottles, and thus compromise the efficiency of the collapse.

An object of the present invention is to provide an alternative, collapsible bottle. An object of particular embodiments of the invention is to provide a bottle which collapses more easily and/or in a more controlled manner.

Accordingly, the present invention provides a bottle according to claim 1.

Regions of different weakness are circumferentially spaced in or around the wall or walls so as to promote axial collapse of the bottle. The region of greatest weakness around the circumference at a given point, referred to also as the region of weakness at that point, collapses first and propagates collapse in response to an axial crushing force.

Adjacent pleats thus start to collapse at positions which are staggered around the bottle circumference. The region of greatest weakness of a first pleat is thus spaced from the region of greatest weakness of a second pleat, adjacent the first, when viewed from above, along the bottle axis.

The regions of weakness act as collapse initiators and are typically points of highest stress or greatest weakness in a bottle wall, e.g. in a given bottle pleat, and designed to collapse first in response to axial collapsing forces and before other points on the same pleat or ring collapse or start to collapse, such as after being emptied and when it is desired to crush the bottle prior to disposal.

The bottle preferably comprises three or more collapsible pleats, all of which have such collapse initiators which, when viewed along the axis of the bottle, are staggered with respect to each other and not parallel with the bottle axis. The regions of weakness are hence circumferentially (or radially) staggered or spaced, generally in an even manner. More preferred bottles comprise four or more collapsible pleats. Particular bottles, illustrated below, have seven or more collapsible pleats.

In use, the bottle is adapted to hold liquid. Once emptied it can be collapsed to a reduced volume. Application of force along the bottle axis initiates collapse beginning at the collapse initiators at their respective positions on the bottle pleats. This reduces the force needed to collapse the bottle, as the collapse once started is readily propagated. This also leads to a more controlled collapse than would otherwise be the case. Collapse of a bottle of the invention begins at predetermined locations and generally in a predetermined order. Known bottles can be particularly stiff and difficult to collapse; the present invention reduces this problem. Known bottles may crumple suddenly at random locations; the present invention reduces this problem or even avoids it altogether.

The bottles generally are collapsible to a volume approximately ⅓ or less of the original volume, preferably to a volume approximately ¼ or less of its original volume. In the collapsed form the bottles are more efficiently stored or transported to waste locations, e.g. land fill sites.

The bottle pleats are typically formed by successive folds in the bottle wall, resulting in a series of concertina-like pleats around the circumference and down the sides of the bottle. The pleats are defined by folds in the wall at the apices of the pleats (being outer folds) and the troughs of the pleats (being inner folds). The apices define the outer dimensions of the bottle and, apart from at its top and bottom, the bottle as thus defined or a major portion of the bottle may be generally cylindrical in appearance. The pleats can also be of different diameters, optionally varying along the bottle axis. Two or more adjacent pleats can be successively larger and larger, or smaller and smaller, so that in a collapsed state the folds more easily fit into each other, yielding a collapsed bottle of more significantly reduced volume. A preferred embodiment of the invention comprises three pleats in a row having troughs with diameters that progressively increase. The diameters of at least two of the pleat apices in a row progressively increase. When collapsed, these nest tightly inside each other.

A collapsible bottle of the invention may in certain embodiments comprise substantially concentric wall portions of a concertina construction, said wall proportions defining troughs between adjacent ridges and having regions of weakness to initiate collapse when the bottle is subjected to a compressive axial force, characterized in that regions of weakness on adjacent troughs are circumferentially and axially displaced. In said bottle, the regions of weakens may be located along a helix. Preferably, the wall portions have circumferentially alternate regions of greater and lesser weaknesses, and axially alternate regions of greater and lesser weakness, regions of similar weakness being aligned in a helical direction.

The collapse initiators on a series of adjacent pleats are optionally helically located, that is to say a helical line can be drawn through them, around the bottle circumference. They thus are sequentially staggered around the circumference. If staggered by approximately 90 degrees then each fourth collapse initiator is located approximately above each other.

Preferred bottles of the invention comprise at least one pleat or fold or ring of reduced diameter, i.e. having reduced apex and trough diameter positioned towards the top of the bottle and adapted to collapse before larger diameter pleats towards the bottom of the bottle.

Particular bottles of the invention, one of which is shown in the accompanying drawings, comprise two pleats of reduced diameter, located towards the top of the bottle. These provide a conveniently narrowed section to the bottle, facilitating location in the hand and making the bottle easier to hold. These reduced diameter pleats preferably also comprise collapse initiators and may be designed to collapse first, before pleats lower down or, if present, higher up the bottle.

Bottles of the invention, one of which is shown in the drawings, may additionally or separately comprise four or more pleats of substantially the same diameter, located towards the bottom of the bottle. These may form the main body of the body and may have pleat apex diameters larger than the reduced diameter upper pleats mentioned immediately above.

In further embodiments of the invention, described in more detail below, a bottle comprises a plurality of pleats or folds adapted to collapse into a collapsed form of significantly reduced volume. The diameter of the pleats is reduced towards the top of the bottle. Hence, the bottle typically comprises two pleats of reduced diameter towards the top of the bottle and five pleats of larger diameter, all of these larger pleats having substantially the same diameter. When a collapsing force is applied to the bottle, the smaller diameter pleats, being closer to the top of the bottle, collapse first and the larger diameter pleats collapse afterwards. The first pleats collapse hence at positions closer to the top of the bottle and closer to the point at which the collapsing force is applied. This is found to result in a controlled collapse of the bottle with reduced risk of buckling if the force is not squarely applied.

Preferably the bottle has an upper, a middle and a lower portion and said regions of weakness are weakest in the middle portion and of least weakness in the upper portion, whereby the middle portion collapses before the lower portion and the lower portion collapses before the upper portion.

Bottles of the invention can be of various axial cross-sectional configurations. They can be approximately circular, elliptical, square, square with rounded corners, rectangular, rectangular with rounded corners or combinations of these, though preferred bottles are substantially circular in cross-section. Reference to being substantially circular, etc., is intended to describe the approximate shape of the bottle ignoring the many folds or pleats over the bottle's surface.

There are a number of different ways of introducing the regions of weakness or collapse initiators into the side of the bottle. As will be appreciated by a person of skill in the art, thicker material is generally more resistant to collapse and thinner material is generally less resistant to collapsing. Hence, a collapse initiator can be a region of reduced bottle wall thickness, generally at or around the apex or trough of a pleat. An alternative collapse initiator is created by use of varying the fold angle of a pleat around the circumference of the bottle. A region of decreased fold angle is less resistant to collapse that a larger angle. Hence a collapse initiator can also be reduced fold angle at the apex or trough of a fold. A reduced fillet radius, that is to say a tighter curvature at the fold, is also less resistant to collapse. A further collapse initiator comprises reduced fillet radius at the fold. Collapse initiators can also combine two or three of these features, e.g. be a fold having reduced wall thickness and reduced fold angle, a fold having reduced wall thickness and reduced fillet radius, a fold having reduced fold angle and reduced fillet radius or a fold having reduced wall thickness, reduced fold angle and reduced fillet radius.

Preferably as set out in more detail below, a pleat has a fold angle at its trough that varies around the circumference of the bottle. In a specific embodiment the trough angle is about 60 degrees at its smallest and about 80 degrees at its largest, the collapse initiator being located where the angle is smallest, namely about 60 degrees. Generally, the trough angle may vary by at least 5 degrees, or by at least 10 degrees between the collapse initiator, designed to collapse first, and other portions of the trough around the circumference. Viewed from the side, with the collapse initiator of a given pleat at, say, the extreme right hand side, such bottles of the invention are noticeably asymmetric: the portion of the trough with increased angle is not as deep as the portion of the trough with decreased angle, i.e. the collapse initiator can be seen as a deeper or more pronounced indentation into the side wall of the bottle.

Preferably the radius of curvature of the fold at the trough varies around the circumference of the bottle. Viewed from the side, with the collapse initiator of a given pleat at, say, the extreme right hand side, such bottles are also seen to be asymmetric: the portion of the trough with decreased radius of curvature, i.e. the collapse initiator, is seen to have a sharper fold than other portions of the trough; in this case sharper on the right than on the left. As already described, collapse initiators may combine two or more features to introduce relative weakness into the bottle wall, and hence particular further embodiments comprise a portion of a trough in which the collapse initiator has reduced trough angle and decreased radius of curvature and can be seen as a more pronounced indentation having a sharper fold at the trough.

A bottle of the invention thus comprises points of weakness around its circumference which preferentially collapse in response to the collapsing or crushing force applied, the collapse then propagating around the pleat. These points of weakness are staggered around the outside of the bottle, hence staggered around the circumference of the bottle when viewed from above.

The locations of points of weakness can simply be alternated from one ring to another. Alternatively, the points of weakness are sequentially or successively staggered, e.g. in a stepwise manner, in the same direction around the circumference of the bottle, hence forming a roughly helical line of weak points along the bottle axis.

According to the invention, points of weakness which are on adjacent rings are staggered by an angle of at least 30 degrees when viewed from above and along the axis of the bottle, preferably at least 45 degrees, more preferably at least 60 degrees. The stagger is less than 180 degrees and preferably 135 degrees or less, more preferably 120 degrees or less. Preferably as set out in more detail in the examples, the points of weakness are staggered by approximately 90 degrees from one ring to the next in a helix around the outside of the bottle.

For each ring or pleat there is just one point of weakness.

It is particularly preferred that for each ring or pleat there are two or fewer points of weakness, more preferably just one point of weakness, and the point or points of weakness on adjacent rings or pleats are successively staggered by angles which are each independently at least 30 degrees, at least 45 degrees or at least 60 degrees. A line drawn through the points is approximately helical. Such embodiments of the invention are found to be axially strong as there are few (only one or two) weak points per pleat. In addition, the flat helical nature of the weak points means that in response to a combination of an axial force and a twisting or turning motion the bottle can be easily collapsed, as weak points initiate collapse successively along a helical line corresponding to the twisting or turning force.

The bottle is hence strong but surprisingly easily collapsed. To do so, the points of weakness or "fold starters" are helped by being given a twist to start the collapse, using an eccentric motion to promote the collapse and wind the bottle down.

The points of weakness on adjacent rings are staggered approximately 90° in an example set out below. In twisting the bottle during collapse there are 4 per revolution. In another embodiment the points of weakness on adjacent rings are staggered approximately 120° and there are 3 per revolution. In these embodiments there are relatively few points of weakness spaced around the bottle and hence the locations of anticipated material fatigue are limited; these locations can be adapted to be weak but be both collapsible and restorable so the bottle can be used, and collapsed then restored and refilled.

Preferably the bottle is asymmetric and this enables and promotes the controlled collapsing: collapse begins more readily at certain predefined points on the circumference of the bottle and is then propagated throughout that pleat to other pleats and parts of the bottle. It is preferred that the diameter of the pleat apices or outer rings is substantially the same and that the asymmetry is due to varying diameter of troughs, i.e. the internal dimensions. This improves the bottles appearance and facilitates labeling and handling of the bottle during production.

The bottle may have a cap provided with a one-way valve, several designs of which are available commercially. This may assist slightly in holding the bottle in its collapsed state: the valve is opened, the bottle collapsed and then the valve closed.

Bottles of the invention are preferably made of biodegradable material, and a variety of different biodegradable materials are available and known in the art. Particularly preferred bottles of the invention comprise or are made of polylactic acid (PLA). Preferably as described in more detail below, a collapsible bottle has been made from PLA and was found to have good properties. The material was stable and clear. In use, the PLA exhibited less memory than a known polymer extensively used for bottle manufacture, namely polyethylene terephthalate (PET), with the consequence that the PLA bottles collapsed well and remained in a collapsed position, tending not to spring back into an open or partially open form. The PLA bottle was, additionally, found to be less brittle in use than the PET known bottles.

It is also an option for bottles of the invention to be made out of metal. These do not have the biodegradable properties of, for example, PLA but crush easily and are hence preferable to non-collapsible bottles or cans made of metal.

Bottles of the invention are made in a number of different sizes and can have different numbers of pleats along their length. Preferred bottle of the invention can hold up to 2 litres of liquid, more preferably up to 1.5L, up to 1 L, about 250mL and in a specific embodiment, illustrated below, about 500mL. Different combinations of pleats and apex and trough diameters, and different selection of the manner of incorporating the collapse initiators may be appropriate for different bottle sizes and materials. A bigger volume bottle, for example five litres, may require more pronounced asymmetry in order to control the crushing.

Bottles of the invention are conveniently made by moulding processes, especially by blow-moulding. Reference to folds or pleats in the bottle thus refer not to the result of a folding or pleating process but to the appearance of the finished bottle, e.g. after moulding to a particular shape. In a specific embodiment of the invention, the bottle is made by one such blowing process and to make a 500ml bottle a pre-form containing about 19g of PLA was used. This yielded a bottle that was sufficiently strong to contain water but nevertheless collapsed easily and in a controlled manner.

The invention further provides a method of collapsing a bottle, comprising applying to a bottle according to the invention both an axial compressive force and an axial rotation, promoting collapse of the regions of weakness and thus collapse of the bottle. Hence the bottle can be collapsed by twisting and pushing the bottle along its axis.

The invention is now illustrated with reference to the accompanying drawings, in which:-
Fig 1 shows a schematic front view of a bottle of the invention;
Fig 2 shows a schematic view from in front and above of the bottle of Fig 1;
Fig 3 shows a schematic view of the bottle of Fig 1 from the front and above and at an angle;
Fig 4 shows a schematic side view of the bottle of Fig 1, including details of variation of fillet radius and angle throughout the bottle;
Figs 5a, 5b and 5c show schematic side and cut-away views of a pleat in the wall of the bottle of Fig 1;
Fig. 6a and 6b show schematic views of the bottle of fig. 1 in various stages of collapse; and
Figs 7a, 7b and 7c show schematic views of a bottle of a further embodiment of the invention, in various stages of collapse.

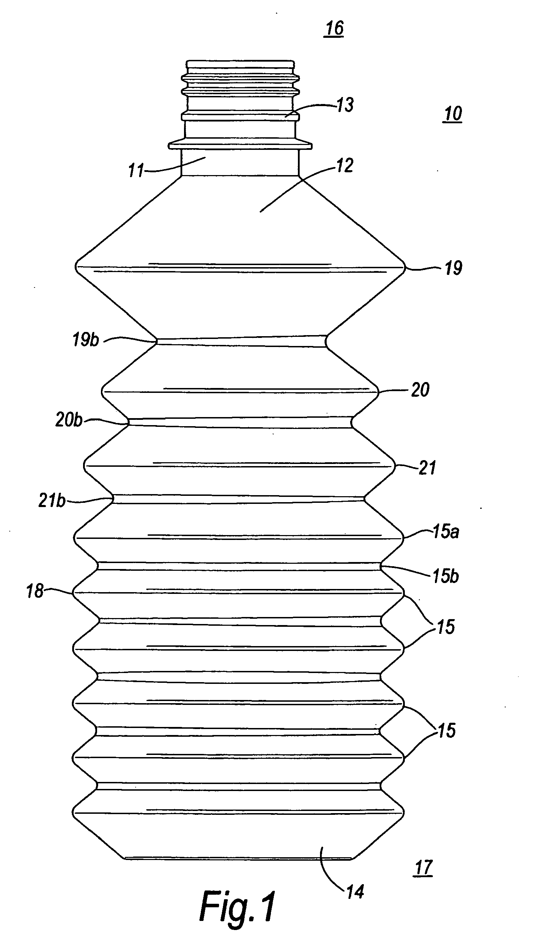

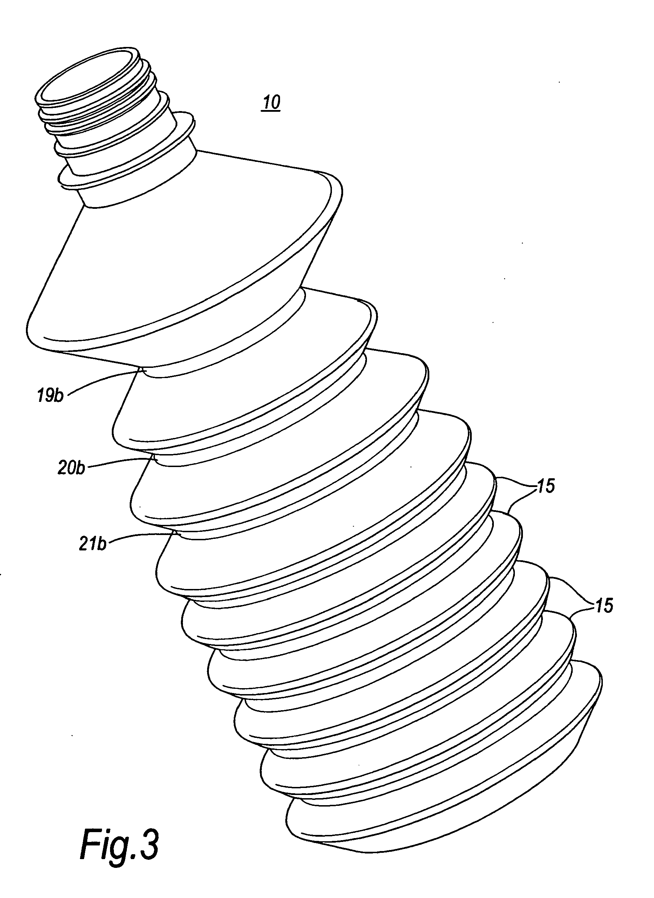

Referring to Figs 1-5, a 500ml bottle 10 is blow-moulded from poly-lactic acid (PLA) and comprises a neck 11 and a body 12. A screw thread 13 is provided on the neck for attachment of a cap (not shown). The bottle is substantially circular in cross section.

The bottle has nine pleats along its axis, including a succession of pleats 15 of approximately similar outer diameter, each pleat comprising outer fold or apex 15a and inner fold or trough 15b.

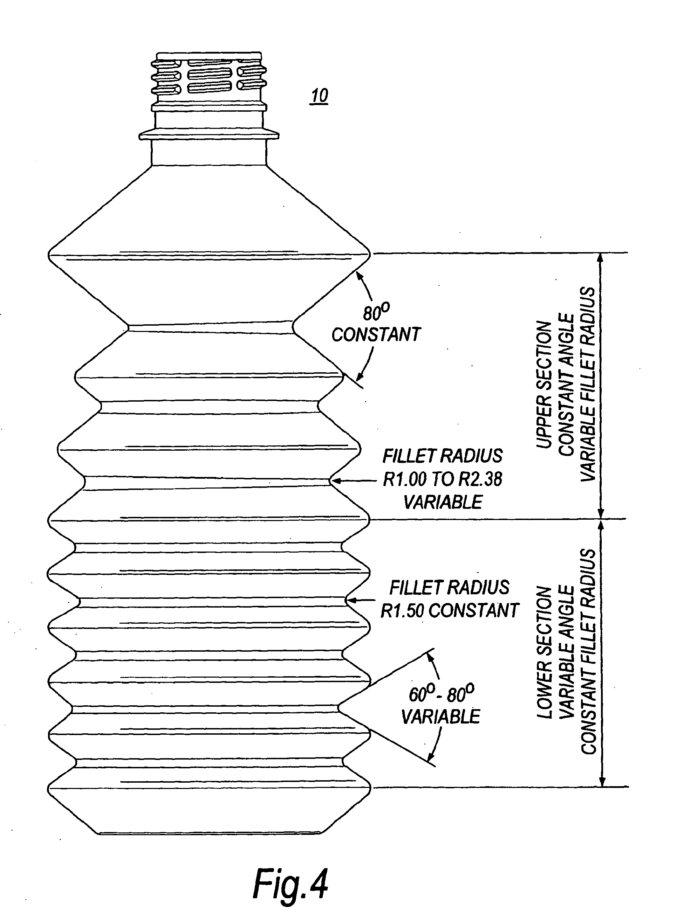

Towards the top of the bottle, there is first pleat 19, second pleat 20 and third pleat 21 and corresponding folds 19b, 20b and 21 b. The diameter of inner fold 19b is the narrowest and the diameter of adjacent inner folds 20b and 21b steadily increase. The bottle ends in base 14 at the bottom 17 of the bottle. Referring specifically to Figure 4, fold angles and radius of fold curvatures, i.e. fillet radius, are shown along the axis of the bottle. Referring to the right hand side of Figure 4, the fold angle for the bottom-most fold is approximately 69°, the angle of the next fold on that side is approximately 60°, that of the next fold approximately 69° and that of the next fold 80°, and so on. The reduced inner fold or trough angle is the region of weakness or collapse initiator for that pleat, so the collapse initiator for the second pleat up from the bottom is on the right hand side in Fig. 4, for the third pleat up it is at the back of the bottle, for the fourth pleat up it is on the left hand side, for the fifth pleat up it is on the front of the bottle, and so on.

The regions of weakness identified in the fig. 4 bottle are further appreciated by reference to the following table:

**Table 1**
In the table:-
- ring 1 refers to the bottom-most outer ring or fold, the bottom-most trough being located between ring 1 and the next ring up, namely ring 2, and hence being referred to as 1-2, etc
- radial position refers to the position on the circumference when viewed from above, radial position 0 being the back of the bottle in fig. 4, radial position 90 being the right hand side of the bottle, radial position 180 being at the front of the bottle and radial position 270 being on the left hand side.

| **Ring Number** | **Radial Position** | **Trough Angle** | **Trough Depth** | **Fillet Radius** |
|---|---|---|---|---|
| **1-2** | 0 | 80 | Small | 1.50 |
| | 90 | 69 | Medium | 1.50 |
| | 180* | 60 | Large | 1.50 |
| | 270 | 69 | Medium | 1.50 |
| **2-3** | 0 | 69 | Medium | 1.50 |
| | 90* | 60 | Large | 1.50 |
| | 180 | 69 | Medium | 1.50 |
| | 270 | 80 | Small | 1.50 |
| **3-4** | 0* | 60 | Large | 1.50 |
| | 90 | 69 | Medium | 1.50 |
| | 180 | 80 | Small | 1.50 |
| | 270 | 69 | Medium | 1.50 |
| **4-5** | 0 | 69 | Medium | 1.50 |
| | 90 | 80 | Small | 1.50 |
| | 180 | 69 | Medium | 1.50 |
| | 270* | 60 | Large | 1.50 |
| **5-6** | 0 | 80 | Small | 1.50 |
| | 90 | 69 | Medium | 1.50 |
| | 180* | 60 | Large | 1.50 |
| | 270 | 69 | Medium | 1.50 |
| **6-7** | 0 | 80 | Small | 1.70 |
| | 90* | 80 | Small | 1.00 |
| | 180 | 80 | Small | 1.70 |
| | 270 | 80 | Small | 2.38 |
| **7-8** | 0* | 80 | Small | 1.00 |
| | 90 | 80 | Small | 1.70 |
| | 180 | 80 | Small | 2.38 |
| | 270 | 80 | Small | 1.70 |
| **8-9** | 0 | 80 | Small | 1.70 |
| | 90 | 80 | Small | 2.38 |
| | 180 | 80 | Small | 1.70 |
| | 270* | 80 | Small | 1.00 |

| | | | | |
|---|---|---|---|---|
| * ₋ weak point, collapse initiator | | | | |

Thus, referring again to Fig. 4, the lower section of the bottle has 5 troughs with variable fillet angle between about 60 degrees and about 80 degrees. The fillet radius is constant around the circumference of these troughs. Weakest points are where the angle is least (i.e. 60 degrees). The upper section of the bottle has 3 troughs all with circumferences that narrow towards the top of the bottle and all with a constant fillet angle of about 80 degrees. Here the fillet radius varies, between about 1.00 and about 2.38, to introduce the regions of weakness. The fillet is deeper where the radius is least and shallower where greatest. The weakest points are where the radius is least. The fillet depth is eccentric, causing the weak points, which promote collapse initiation, to rotate with that eccentricity. The bottle thus has some weakness introduced by fillet angle and some by fillet radius.

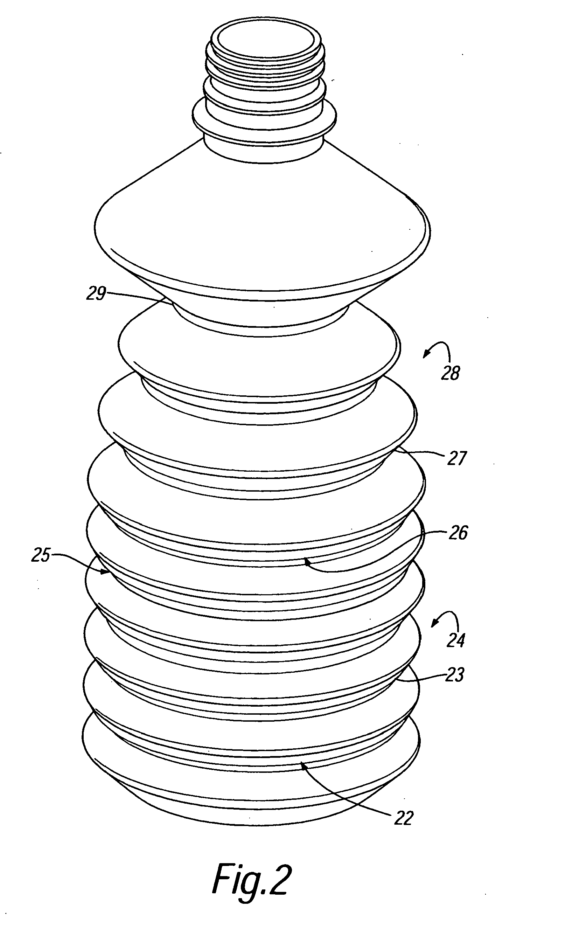

Referring to Fig. 2 the regions of weakness are marked as a series of collapse initiators 22-29 located at different positions on the bottle wall. In the inner fold 22 of the lower pleat, the collapse initiator is located at the front of the bottle. Successive collapse initiators 23 onwards are located in a helix which rises up around the circumference of the bottle. Hence, the next collapse initiator 23 on the adjacent fold is on the right hand side of the bottle, the next collapse initiator 24 is on the back of the bottle, not visible in the drawing but illustrated by 24. The next collapse initiator 25 is on the left hand side of the bottle, the next collapse initiator 26 is at the front of the bottle and the subsequent collapse initiators 27, 28 and 29 are on the right hand side, at the back and on the left hand side of the bottle respectively.

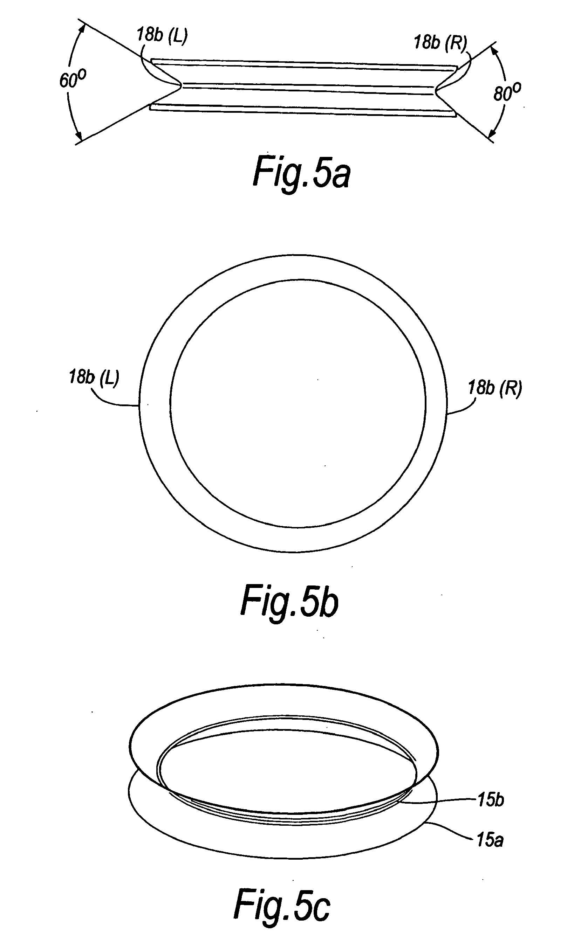

Referring to Fig.s 5a, 5b and 5c, detail of one so-called pleat are provided, showing how the trough depth and trough angle vary around the circumference of that pleat and thus determine the location of a region of weakness. Fig. 5a is a schematic side view of the pleat, fig. 5b is a schematic view from above of the pleat and fig. 5c is a schematic view from above and in front, with the pleat at an angle. The pleats generally have each an apex 15a and trough 15b. Viewed from directly in front, as in fig. 5a, the right hand trough angle 18b(R) is 80 degrees whereas the left hand side trough angle 18b(L) is 60 degrees. Though not measurable easily from the figures, the trough angle varies smoothly and continuously between these two extremes, and hence is about 69 or 70 degrees at both the front and also at the back of the pleat. When seen from above, the trough is narrowest or shallowest at the right hand side - see 18(R) in fig. 5b - and widest or deepest at the left hand side - see 18(L). The region of weakness is located at 18b(L), i.e. the least trough angle. This eccentricity is substantially the same, though offset 90°, for each of the five fold/troughs from the bottom upwards.

The bottle is designed with a specific order of collapsing of its various parts. In response to an axial crushing force, first the upper, narrowest rings just below the top sections (19, 20, 21) crush, then the lower, similarly - dimensioned rings (15) collapse, then the top section, also referred to as the top diamond because of its appearance from the side, collapses and cups the collapsed upper rings (which are of reduced diameter) which locks the whole collapsed bottle together. Another feature of the top of the bottle is that it is easy to grip. It generally does not have a collapse initiator and so it tends not to buckle or collapse until the very end. An advantage is that water can be drunk and then the bottle can be partially collapsed and the cap screwed on. When partially collapsed the top has not collapsed fully and the central waist portion remains and the bottle remains easy to hold.

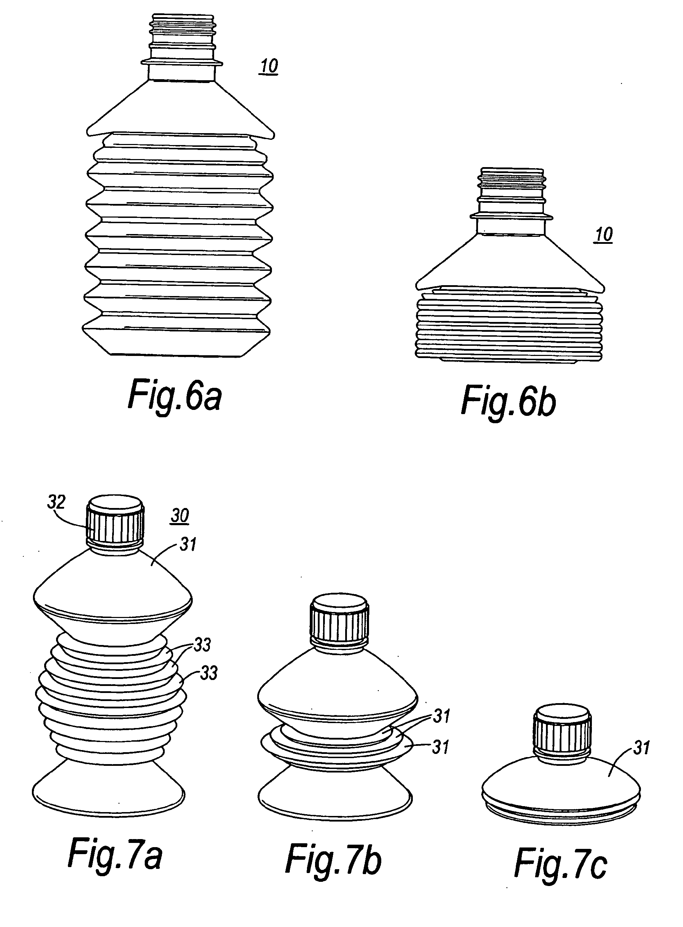

Fig.s 6a and 6b show the bottle in different stages of collapse. The bottle is subjected to an axial crushing force. Upper sections collapse first, the bottle reaching the position shown in fig. 6a. After further crushing, the upper sections complete their collapse and lower sections collapse, the bottle reaching the position shown in fig. 6b.

Referring to Fig.s 7a, 7b and 7c, a further bottle of the invention 30 having body 31 and cap 32 is shown in which a plurality of pleats 33 having staggered collapse initiators are arranged on the outer wall of the bottle. Below the top pleat, the pleat apex diameters increase for the first five to a central pleat then decrease for the next four pleats. The bottle is shown in fully open (6a), half-collapsed (6b) and collapsed (6c) forms.

The invention thus provides a collapsible bottle.

## Claims

1. A bottle (10), comprising a plurality of collapsible pleats (15) and regions of weakness on the pleats (15), **characterised in that** each pleat has only one region of weakness and the regions of weakness on adjacent pleats (15) are circumferentially staggered by at least 30 degrees and located on a helix running around the bottle circumference to promote axial collapse of the bottle (10).

2. A bottle according to claim 1, wherein regions of weakness on adjacent pleats (15) are each independently staggered by at least 45 degrees.

3. A bottle according to any previous claim, wherein regions of weakness on adjacent pleats (15) are each independently staggered by at least 60 degrees.

4. A bottle according to any previous claim, comprising three or more collapsible pleats (15), all of which have regions of weakness which are circumferentially staggered with respect to each other.

5. A bottle according to any previous claim, comprising two pleats (15) of reduced diameter, located towards the top of the bottle (10).

6. A bottle according to any previous claim, being substantially circular in cross-section.

7. A bottle according to any previous claim, wherein the regions of weakness comprise (i) a region of reduced wall thickness, (ii) a fold (15a) in the bottle wall having reduced fillet angle or radius of curvature or (iii) a pleat having reduced fold angle, or wherein the regions of weakness are (iv) troughs (15b), the depth of the trough (15b) varying around the circumference of the bottle (10).

8. A bottle according to any previous claim, comprising seven or more collapsible pleats (15).

9. A bottle according to any previous claim, having a volume of up to 1 Litre.

10. A bottle according to any previous claim, made of biodegradable material.

11. A bottle according to any previous claim, collapsible to a volume approximately ⅓ or less of its original volume.

12. A bottle according to any previous claim, wherein regions of weakness on adjacent pleats (15) are each staggered by 135 degrees or less.

13. A bottle according to any previous claim, wherein regions of weakness on adjacent pleats (15) are each staggered by 120 degrees or less.

14. A collapsible bottle according to claim 1 , comprising substantially concentric wall portions of a concertina construction, said wall proportions defining troughs between adjacent ridges and having regions of weakness to initiate collapse when the bottle (10) is subjected to a compressive axial force, wherein there is one region of weakness per trough and regions of weakness on adjacent troughs are circumferentially displaced at least 45 degrees and located along a helix.

15. A method of collapsing a bottle, comprising applying to a bottle (10) according to any previous claim both an axial compressive force and an axial rotation, promoting collapse of the regions of weakness and thus collapse of the bottle (10).

## Patentansprüche

1. Eine Flasche (10), umfassend eine Vielzahl von zusammenlegbaren Falten (15) und Schwächungsbereiche auf den Falten (15), **dadurch gekennzeichnet, dass** jede Falte (15) nur einen einzigen Schwächungsbereich aufweist, und dass die Schwächungsbereiche auf benachbarten Falten (15) in Umfangsrichtung um mindestens 30 Grad versetzt sind und auf einer Helix angeordnet sind, welche um den Flaschenumfang verläuft, um ein axiales Zusammenfalten der Flasche (10) zu fördern.

2. Eine Flasche nach Anspruch 1, wobei die Schwächungsbereiche auf benachbarten Falten (15) jeweils um mindestens 45 Grad versetzt sind.

3. Eine Flasche nach einem der vorangehenden Ansprüche, wobei die Schwächungsbereiche auf benachbarten Falten (15) jeweils um mindestens 60 Grad versetzt sind.

4. Eine Flasche nach einem der vorangehenden Ansprüche, umfassend drei oder mehr zusammenlegbare Falten (15), wovon alle Schwächungsbereiche aufweisen, welche zueinander in Umfangsrichtung versetzt sind.

5. Eine Flasche nach einem der vorangehenden Ansprüche, umfassend zwei Falten (15) mit reduziertem Umfang, welche im oberen Bereich der Flasche (10) angeordnet sind.

6. Eine Flasche nach einem der vorangehenden Ansprüche, welche einen im Wesentlichen kreisförmigen Querschnitt aufweist.

7. Eine Flasche nach einem der vorangehenden Ansprüche, wobei die Schwächungsbereiche (i) einen Bereich mit reduzierter Wandstärke, (ii) eine Faltung (15a) in der Flaschenwand mit reduziertem Ausrundungswinkel oder Krümmungsradius oder (iii) eine Falte mit reduziertem Faltungswinkel umfassen, oder wobei die Schwächungsbereiche (iv) Ausrundungen (15b) sind, deren Tiefe in Umfangsrichtung der Flasche (10) variiert.

8. Eine Flasche nach einem der vorangehenden Ansprüche, umfassend sieben oder mehr zusammenlegbare Falten (15).

9. Eine Flasche nach einem der vorangehenden Ansprüche, aufweisend ein Volumen von bis zu einem Liter.

10. Eine Flasche nach einem der vorangehenden Ansprüche, gefertigt aus einem biologisch abbaubaren Material.

11. Eine Flasche nach einem der vorangehenden Ansprüche, welche etwa zu einem Volumen von einem Drittel oder weniger des ursprünglichen Volumens zusammenlegbar ist.

12. Eine Flasche nach einem der vorangehenden Ansprüche, wobei die Schwächungsbereiche auf benachbarten Falten (15) jeweils um 135 Grad oder weniger versetzt sind.

13. Eine Flasche nach einem der vorangehenden Ansprüche, wobei die Schwächungsbereiche auf benachbarten Falten (15) jeweils um 120 Grad oder weniger versetzt sind.

14. Eine Faltflasche nach Anspruch 1, umfassend im Wesentlichen konzentrische Wandbereiche einer Ziehharmonika-Struktur, wobei die Wandbereiche Ausrundungen zwischen zwei benachbarten Rücken definieren und einen Schwächungsbereiche aufweisen, um ein Zusammenlegen einzuleiten, wenn die Flache (10) einer axialen Druckkraft ausgesetzt wird, wobei jeweils ein Schwächungsbereich per Ausrundung vorhanden ist und die Schwächungsbereiche in benachbarten Ausrundungen in Umfangsrichtung um mindestens 45 Grad versetzt sind und auf einer Helix angeordnet sind.

15. Ein Verfahren zum Zusammenlegen einer Flasche, umfassend das Ausüben einer axialen Druckkraft und einer axialen Rotation auf eine Flasche nach einem der vorangehenden Ansprüche, um einen Kollaps der Schwächungsbereiche zu fördern und somit ein Zusammenlegen der Flasche (10).

## Revendications

1. Bouteille (10) comprenant une pluralité de plis (15) compressibles et régions d'affaiblissement sur les plis (15), **caractérisée en ce que** chaque pli présente seulement une région d'affaiblissement et les régions d'affaiblissement sur des plis adjacents (15) sont échelonnées sur la circonférence d'au moins 30 degrés et situées sur une hélice s'étendant autour de la circonférence de la bouteille pour faciliter la compression axiale de la bouteille (10).

2. Bouteille selon la revendication 1, dans laquelle des régions d'affaiblissement sur des plis adjacents (15) sont chacune échelonnées indépendamment d'au moins 45 degrés.

3. Bouteille selon l'une quelconque des revendications précédentes, dans laquelle des régions d'affaiblissement sur des plis adjacents (15) sont chacune échelonnées indépendamment d'au moins 60 degrés.

4. Bouteille selon l'une quelconque des revendications précédentes, comprenant trois ou plusieurs plis compressibles (15), tous présentant des régions d'affaiblissement échelonnées sur la circonférence les unes par rapport aux autres.

5. Bouteille selon l'une quelconque des revendications précédentes, comprenant deux plis (15) de diamètre réduit, situés vers le dessus de la bouteille (10).

6. Bouteille selon l'une quelconque des revendications précédentes, dont la section transversale est sensiblement circulaire.

7. Bouteille selon l'une quelconque des revendications précédentes, dans laquelle les régions d'affaiblissement comprennent (i) une région d'épaisseur de paroi réduite, (ii) un pliage (15a) dans la paroi de bouteille présentant un angle de flanc ou un rayon de courbure réduit ou (iii) un pli présentant un angle de pliage réduit, ou dans laquelle les régions d'affaiblissement sont (iv) des creux (15b), la profondeur des creux (15b) variant autour de la circonférence de la bouteille (10).

8. Bouteille selon l'une quelconque des revendications précédentes, comprenant sept plis compressibles (15) ou plus.

9. Bouteille selon l'une quelconque des revendications précédentes, présentant un volume de 1 litre maximum.

10. Bouteille selon l'une quelconque des revendications précédentes, fabriqué en un matériau biodégradable.

11. Bouteille selon l'une quelconque des revendications précédentes, compressible à un volume d'approximativement 1/3 ou moins de son volume original.

12. Bouteille selon l'une quelconque des revendications précédentes, dans laquelle des régions d'affaiblissement sur des plis adjacents (15) sont chacune échelonnées de 135 degrés ou moins.

13. Bouteille selon l'une quelconque des revendications précédentes, dans laquelle des régions d'affaiblissement sur des plis adjacents (15) sont chacune échelonnées de 120 degrés ou moins.

14. Bouteille compressible selon la revendication 1, comprenant des parties de paroi sensiblement concentriques d'une construction en accordéon, lesdites proportions de paroi définissant des creux entre des nervures adjacentes et présentant des régions d'affaiblissement pour amorcer la compression lorsque la bouteille (10) est soumise à une force compressive axiale, dans laquelle il existe une région d'affaiblissement par creux et des régions d'affaiblissement sur des creux adjacents sont déplacées sur la circonférence d'au moins 45 degrés et situées le long d'une hélice.

15. Procédé de compression d'une bouteille, comprenant l'application à une bouteille (10) selon l'une quelconque des revendications précédentes à la fois d'une force compressive axiale et une rotation axiale, facilitant la compression des régions d'affaiblissement et ainsi la compression de la bouteille (10).
